**Europäisches Patentamt**

**European Patent Office**

**Office européen des brevets**

(19)

(11) Numéro de publication : **0 347 346 B1**

(12) ## FASCICULE DE BREVET EUROPEEN

(45) Date de publication du fascicule du brevet :
**30.09.92 Bulletin 92/40**

(51) Int. Cl.⁵ : **B29C 45/14, A43B 13/37**

(21) Numéro de dépôt : **89420210.0**

(22) Date de dépôt : **13.06.89**

(54) **Procédé de fabrication d'une chaussure à semelle injectée et chaussure obtenue par ce procédé.**

(30) Priorité : **13.06.88 FR 8808328**

(43) Date de publication de la demande :
**20.12.89 Bulletin 89/51**

(45) Mention de la délivrance du brevet :
**30.09.92 Bulletin 92/40**

(84) Etats contractants désignés :
**BE DE ES GB IT**

(56) Documents cités :
**EP-A- 0 161 136**
**DE-A- 1 804 560**
**DE-A- 2 444 472**
**DE-B- 2 603 716**

(73) Titulaire : **LA FOURMI S.A.**
**F-49510 La Jubaudière (FR)**

(72) Inventeur : **Grimault, Bernard**
**Le Soleil Levant La Jubaudière**
**F-49510 Jallais (FR)**

(74) Mandataire : **Maureau, Pierre et al**
**Cabinet GERMAIN & MAUREAU B.P. 3011**
**F-69392 Lyon Cédex 03 (FR)**

EP 0 347 346 B1

## Description

La présente invention se rapporte à un procédé de fabrication d'une chaussure à semelle injectée, correspondant un préambule de la revendication 1.

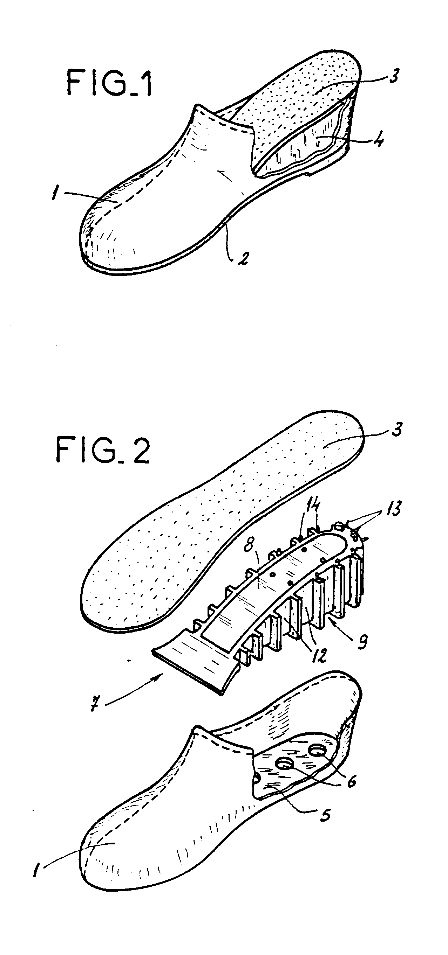

La figure 1 annexée représente, en perspective partiellement écorchée, une pantoufle classique à semelle injectée. Pour fabriquer une pantoufle de ce style, la tige 1 est fixée par piqûre sur une pièce de peau ou de toile servant de première souple, ou "première de montage". Cet ensemble tige-première est ensuite placé sur une forme en aluminium qui est chauffée par des résistances électriques intérieures. L'ensemble est ensuite retourné sur le moule, de façon à réaliser la fermeture de celui-ci, la forme étant prévue pour constituer le couvercle de ce moule. Une matière thermoplastique, du genre PVC par exemple, est alors injectée dans le moule pour constituer la semelle 2 de la pantoufle. L'ensemble tige-semelle est alors retiré du moule, en suite de quoi le talon de liège 4, ou insert, est rapporté par collage sur la tige. Enfin, une première de propreté 3 est collée sur le talon 4 et la première souple de montage précitée. On obtient ainsi la pantoufle à talon haut enrobé qui est représentée à la figure 1.

Ce procédé de fabrication d'une chaussure a pour inconvénient d'entraîner un temps de réalisation relativement important. Il est en effet nécessaire de procéder à un encollage de l'insert et de la première de propreté. Lorsque la colle est presque sèche, il faut presser la pantoufle à l'aide d'une machine spéciale prévue à cet effet, afin de bien maintenir en place les différents morceaux à assembler. En particulier, il faut veiller à assurer un bon blocage de la partie arrière de la chaussure. Ces manipulations successives ainsi que ce matériel approprié contribuent à pénaliser le prix de revient de chaque chaussure.

Le document DE-A-2 444 472, ayant servi de base pour le préambule de la revendication 1, décrit un procédé de réalisation d'une chaussure du type précité, dans lequel l'insert est placé sous la première de montage et comprend des évidements en contre-dépouille, destinés à être envahis par la matière thermoplastique lors de l'injection de manière à solidariser ledit insert et ladite matière thermoplastique après refroidissement de celle-ci. Après l'injection, une première de propreté est mise en place et fixée à la première de montage.

Cette dernière opération implique des manipulations spécifiques des chaussures. De plus, les chaussures obtenues présentent l'inconvénient d'être relativement fragiles au niveau de la liaison insert-matière injectée.

L'invention vise à remédier à ces inconvénients. Elle se rapporte à cet effet à un procédé de réalisation d'une chaussure à semelle injectée, dans lequel il est prévu d'utiliser une tige assemblée à une première de montage et un insert pour constituer le talon de la chaussure, et de réaliser la semelle par injection de matière thermoplastique.

Selon l'invention, ce procédé consiste :
– à utiliser une première de montage qui est percée de trous aptes à livrer passage au produit thermoplastique d'injection ;
– à utiliser un insert dont au moins les faces latérales sont pourvues de stries formant des passages pour ce même produit thermoplastique ;
– à placer sur la forme du moule à la fois la tige avec sa première de montage, l'insert précité, et la première de propreté, ces pièces étant mises en place dans leurs positions respectives définitives ;
– et à effectuer l'injection de la matière thermoplastique de façon à réaliser, par cette seule opération, à la fois la semelle de la chaussure et la solidarisation des autres pièces constitutives (ensemble tige-première de montage, insert, première de propreté) de cette chaussure.

D'autres développements avantageux du procédé selon la présente invention font l'object des revendications dépendantes.

De toute façon, l'invention sera bien comprise, et ses avantages et autres caractéristiques ressortiront, au cours de la description suivante d'un exemple non limitatif de réalisation d'une pantoufle à talon haut enrobé, en référence au dessin schématique annexé dans lequel.

Figure 2 est une vue éclatée, avec écorchement partiel, des pièces constitutives de cette pantoufle avant leur mise en place sur la forme ;

Figure 3 est une coupe longitudinale du moule, avant fermeture et injection, les pièces précitées étant en place sur la forme ; et

Figure 4 montre, en coupe transversale selon IV-IV de figure 3, l'opération d'injection au moule.

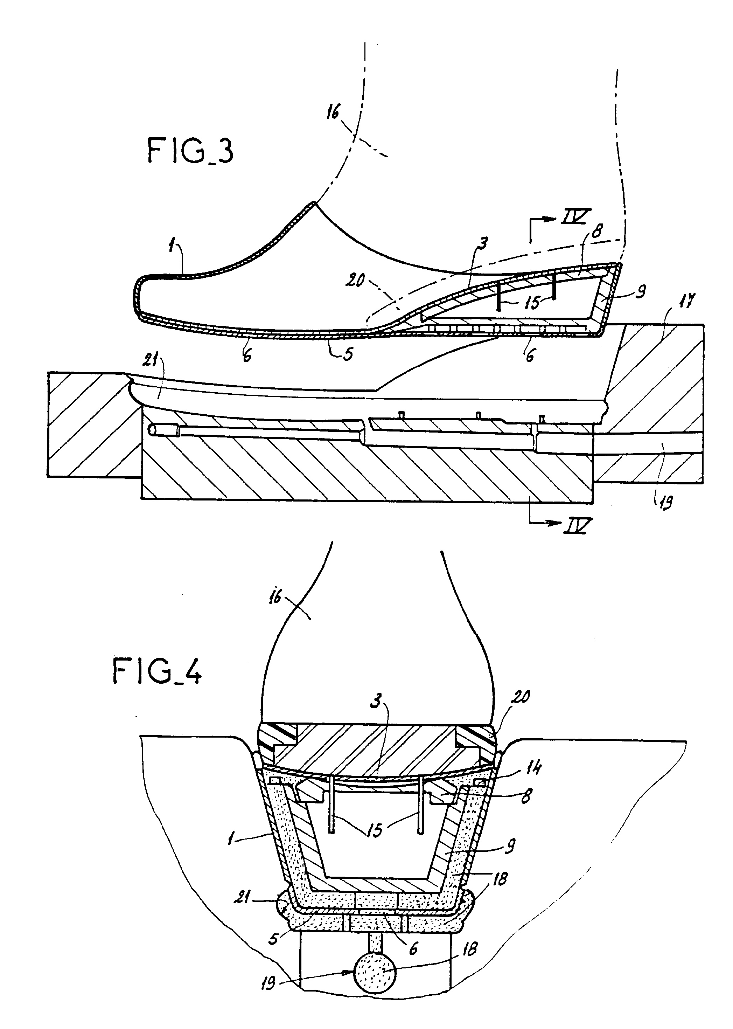

En se référant aux figures 2 et 3, la tige 1 destinée à la réalisation de cette pantoufle est classiquement cousue sur une première de montage 5, mais cette première est percée de six orifices 6, alignés dans le sens longitudinal, dont :
– quatre orifices assez rapprochés, sous la moitié arrière de la première de montage 5,
– deux orifices plus espacés, sous la moitié avant de cette première 5. Ces orifices ont un diamètre de l'ordre de 8 à 10 millimètres, pour fixer les idées, afin de permettre le libre passage d'une matière thermoplastique fondue.

Pour s'encastrer dans cet ensemble tige-première 1,5, il est prévu un insert 7 dont le contour extérieur a la même allure générale que le talon 4 précité (figure 1). Cet insert 7 est réalisé en matière plastique rigide ou en bois et il est composé de deux parties, dont :
– un couvercle 8 percé de quatre petits trous 10 aptes à recevoir, en encastrement étroit, les pointes de clouage de la première de propreté 3,

– une pièce maîtresse 9 qui reçoit ce couvercle 8 et dont les faces extérieures latérales et inférieure sont garnies de larges stries 12 aptes à livrer passage à la matière thermoplastique d'injection.

En outre sont prévues sur cette pièce 9, à l'extrémité arrière supérieure de celle-ci, trois protubérances pointues 13, sensiblement horizontales et, sur sa partie arrière supérieure, des protubérances verticales 14, d'une hauteur de l'ordre de 2 millimètres et séparées par des espaces.

En se référant maintenant à l'ensemble des figures 2 à 4, la fabrication d'une pantoufle s'effectue de la manière suivante :

Les trois pièces de la figure 2 :
– ensemble tige 1-première de montage 5,
– insert complet 7,
– première de propreté 3,

sont tout d'abord assemblées mécaniquement. Pour ceci, la première de propreté 3 est placée sur la forme 16 et centrée par l'intermédiaire des pointes 15. L'insert complet 7 est mis en place sur ces mêmes pointes 15. Ensuite, l'ensemble 1 et 5 est positionné sur la forme 16, l'arrière de cet ensemble est fixé sur les trois protubérances pointues 13 de l'insert 7. Les quatre pointes de clouage sont indiquées en 15 sur les figures 2 et 3.

Cet ensemble 1,5,7,3, est ensuite mis en place sur le moule 17 (figure 3).

La matière thermoplastique 18 est alors injectée de façon habituelle par les conduites 19 prévues à cet effet. Un joint de caoutchouc 20 limite utilement le trajet de la matière plastique fondue, tandis que les protubérances 14 favorisent son infiltration entre l'insert et la première de montage 5.

Finalement, la matière thermoplastique remplit non seulement l'espace inférieur 21 pour réaliser la semelle de la chaussure, mais encore elle remplit les stries 12 précitées et elle s'infiltre partiellement, par les orifices 6 précités ainsi que, grâce aux bossages 14, entre la première de propreté 3 et l'insert 7 ainsi qu'entre cette première de propreté et la moitié avant de la première de montage 5, faisant office de colle.

Après démoulage, la pantoufle obtenue a la même apparence que celle de la figure 1 ; elle est toutefois munie d'un insert selon celui de la figure 2, mais on ne sent pas les stries puisqu'elles sont remplies de matière thermoplastique solidifiée. Ses différentes pièces constitutives précitées sont solidarisées par de la matière thermoplastique identique à celle constituant la semelle 2.

Comme il va de soi, l'invention n'est pas limitée à l'exemple de réalisation qui vient d'être décrit, et elle s'applique par exemple à la réalisation de chaussures n'entrant pas dans la catégorie des pantoufles.

## Revendications

**1** - Procédé de fabrication d'une chaussure à semelle injectée, dans lequel il est prévu d'utiliser une tige assemblée à une première de montage et un insert pour constituer le talon de la chaussure, et de réaliser la semelle par injection de matière thermoplastique, caractérisé en ce qu'il consiste :
– à utiliser une première de montage (5) qui est percée de trous (6) aptes à livrer passage au produit thermoplastique d'injection ;
– à utiliser un insert (7) dont au moins les faces latérales (9) sont pourvues de stries (12) formant des passages pour ce même produit thermoplastique ;
– à placer sur la forme du moule à la fois la tige (1) avec sa première de montage (5), l'insert (7) précité, et la première de propreté (3), ces pièces étant mises en place dans leurs positions respectives définitives ;
– et à effectuer l'injection de la matière thermoplastique (18) de façon à réaliser, par cette seule opération d'injection, à la fois la semelle (2) de la chaussure et la solidarisation des autres pièces constitutives (ensemble tige (1)-première de montage (5), insert (7), première de propreté (3)) de cette chaussure.

**2** - Procédé selon la revendication 1, caractérisé en ce que l'on prévoit en outre des moyens mécaniques (13,15) de maintien en positions relatives des pièces constitutives de la chaussure, avant leur solidarisation par injection de matière thermoplastique.

**3** - Procédé selon la revendication 2, caractérisé en ce que ces moyens mécaniques comportent des protubérances pointues (13) situées à l'arrière de l'insert (7).

**4** - Procédé selon l'une des revendications 1 à 3, caractérisé en ce que l'on utilise un insert (7) qui est en outre pourvu, sur sa face supérieure, de protubérances verticales (14) aptes à faciliter le passage de la matière thermoplastique entre l'insert (7) et la première de propreté (3).

## Patentansprüche

1. Verfahren zum Herstellen eines Schuhs mit angespritzter Sohle, bei welchem ein mit einer Montagebrandsohle verbundener Schaft sowie ein Einsatz zur Bildung des Absatzes dieses Schuhs verwendet werden, und bei welchem die Sohle durch Einspritzen von thermoplastischem Material gebildet wird, dadurch **gekennzeichnet**, daß es die folgenden Schritte umfaßt:
– Verwenden einer Montagebrandsohle (5), die mit Löchern (6) durchsetzt ist, welche das thermoplastische Einspritzmaterial hindurchlassen können;

– Verwenden eines Einsatzes (7), bei welchem zumindest die Seitenflächen (9) mit Rillen (12) versehen sind, die Durchgänge für das thermoplastische Einspritzmaterial bilden;

– Gleichzeitiges Aufsetzen des Schaftes (1) mit der Montagebrandsohle (5), des genannten Einsatzes (7) und der Sichtbrandsohle (3) auf die Gießform, wobei diese Teile in ihren jeweiligen definitiven Positionen angeordnet sind;

– Einspritzen des thermoplastischen Materials (18), wobei durch diesen einzigen Einspritzvorgang gleichzeitig die Sohle (2) gebildet und die feste Verbindung der anderen Aufbauteile des Schuhs (Einheit aus Schaft (1) und Montagebrandsohle (5), Einsatz (7), Sichtbrandsohle (3)) hergestellt wird.

2. Verfahren nach Anspruch 1, dadurch **gekennzeichnet**, daß man außerdem mechanische Mittel (13, 15) verwendet, um die Aufbauteile des Schuhs in ihrer gegenseitigen Position zu halten, bevor sie durch Einspritzen von thermoplastischem Material fest miteinander verbunden werden.

3. Verfahren nach Anspruch 2, dadurch **gekennzeichnet**, daß die mechanischen Mittel spitze Vorsprünge (13) umfassen, die am hinteren Ende des Einsatzes (7) angeordnet sind.

4. Verfahren nach einem der Ansprüche 1 bis 3, dadurch **gekennzeichnet**, daß man einen Einsatz (7) verwendet, welcher zusätzlich auf seiner Oberseite mit vertikalen Vorsprüngen (14) versehen ist, welche ein Eintreten des thermoplastischen Materials zwischen den Einsatz (7) und die Sichtbrandsohle (3) ermöglichen.

**Claims**

1 - Method of manufacturing a shoe with injected sole, in which are used a rod attached to a lasting insole and an insert, forming the heel of the shoe, and the sole is produced by injecting thermoplastic material, characterized in that it consists in:

– using a lasting insole (5) which is pierced by holes (6) capable of letting the thermoplastic material pass through;

– using an insert (7) at least the side faces (9) of which have grooves (12) forming passages for this same thermoplastic material;

– placing on the last of the mould at one and the same time the rod (1) with the lasting insole (5), the above-mentioned insert (7), and the hygienic insole (3), these constituent parts being placed in their respective final positions;

– and in carrying out the injection of the thermoplastic material (18) in such a way as to produce, through this single operation, both the sole (2) of the shoe and the solid joining of the other constituent parts (the rod-insole unit (1), the insert (7) and the hygienic insole (3)) of this shoe.

2 - Method according to Claim 1, characterized in that there are also provided mechanical means (13, 15) of holding the shop's constituent parts in their relative positions, before they are solidly joined together by the injection of thermoplastic material.

3. Method according to Claim 2, characterized in that these mechanical means have pointed protuberances (13) located at the rear of the insert (7).

4. Method according to one of Claims 1 to 3, characterized in that an insert (7) is used which is also equipped on its upper face with vertical protuberances (14) capable of assisting the penetration of the thermoplastic material between the insert (7) and the hygienic insole (3).

# FIG_1

# FIG_2

FIG_3

FIG_4